# DEMANDE DE BREVET EUROPEEN

(11) **EP 4 706 865 A1**
(43) Date de publication de la demande: **11.03.2026**
(21) Numéro de dépôt: 25199547.8
(22) Date de dépôt: 02.09.2025
(51) Int. Cl.: B23K 26/035, B23K 26/08, B23K 26/70, B23K 26/06, B23K 37/006, B23K 26/242, B23K 101/36, B23K 103/04, H02K 1/20, H02K 15/02

(54) **DISPOSITIF ET PROCEDE DE SOUDAGE D'AU MOINS UN PREMIER ELEMENT METALLIQUE SUR UN DEUXIEME ELEMENT METALLIQUE, PROCEDE DE FABRICATION D'UN APPAREIL ELECTRIQUE DE FORTE PUISSANCE ET APPAREIL ELECTRIQUE DE FORTE PUISSANCE**

(30) Priorité: 04.09.2024 FR 2409376
(71) Demandeur: TDV, 88370 Plombières-les-Bains (FR)
(72) Inventeur: JACQUEL, Olivier, 88390 Sanchey (FR)
(74) Mandataire: Cabinet Bleger-Rhein-Poupon

(57) **Abrégé**

L'invention concerne un procédé de fabrication d'un appareil électrique de forte puissance, qui est refroidi par circulation d'air, et qui comporte, d'une part, une pluralité de plaques métalliques magnétiques (3) parallèles empilées et, d'autre part, une pluralité d'espaceurs métalliques (2), qui sont interposés entre deux plaques métalliques magnétiques (3) adjacentes parmi la pluralité de plaques métalliques magnétiques (3), et qui sont soudés (S, S') sur au moins l'une des deux plaques métalliques magnétiques (3) adjacentes parmi la pluralité de plaques métalliques magnétiques (3).

## Description

La présente invention concerne un dispositif de soudage d'au moins un premier élément métallique sur un deuxième élément métallique ainsi qu'un procédé de soudage d'au moins un tel premier élément métallique sur un tel deuxième élément métallique. L'invention concerne, également, une installation de soudage d'au moins un tel premier élément métallique sur un tel deuxième élément métallique. L'invention concerne, également, un procédé de fabrication d'un appareil électrique de forte puissance qui est refroidi par circulation d'air ainsi qu'un tel appareil électrique de forte puissance, plus particulièrement obtenu par la mise en œuvre de ce procédé de fabrication.

Cette invention concerne le domaine du soudage d'un élément métallique sur un autre élément métallique, plus particulièrement, le domaine du soudage d'un élément métallique sur un autre élément métallique magnétique.

Sans n'y être aucunement limitée, la présente invention trouvera une application particulièrement appropriée lorsqu'il s'agit de fabriquer un appareil électrique de forte puissance qui comporte, d'une part, une pluralité de plaques métalliques magnétiques parallèles empilées et, d'autre part, une pluralité d'espaceurs métalliques, interposés entre deux de ces plaques métalliques magnétiques adjacentes, et soudés sur l'une de ces plaques métalliques magnétiques.

L'on connait, d'ores et déjà, différents types de procédés de soudage qui permettent de souder un premier élément métallique sur un deuxième élément métallique, plus particulièrement un premier élément métallique (qui est constitué par un espaceur métallique) sur un deuxième élément métallique (qui est constitué par une plaque métallique magnétique) d'un appareil électrique de forte puissance.

Parmi ces procédés de soudage, un premier type de soudage consiste en un soudage par point, aussi appelé soudage par résistance.

Ce premier type de soudage présente de nombreux inconvénients.

Tout d'abord, on observera que ce premier type de soudage nécessite un apport d'énergie élevé ce qui renchérit le coût d'un tel type de soudage. De plus et lorsqu'un élément à souder présente une faible épaisseur, un tel apport d'énergie peut provoquer une déformation d'un tel élément.

Un autre inconvénient consiste en ce que ce premier type de soudage n'est pas optimal lorsqu'il s'agit de souder deux éléments métalliques qui sont réalisés dans deux matériaux métalliques différents comme par exemple un premier élément en acier inoxydable et un deuxième élément en acier magnétique.

Un autre inconvénient résulte du fait que ce premier type de soudage nécessite le passage de courant au travers d'un élément à souder. Lorsqu'un tel élément présente une section non constante, ce premier type de soudage est difficile à maîtriser et se traduit souvent une soudure imparfaite, voire fragile.

De plus, en réalisant un soudage selon ce premier type de soudage au niveau d'un côté d'un élément métallique de faible épaisseur, il est fréquent que, du côté opposé de cet élément métallique, il apparaît une surépaisseur au niveau du point de soudure (notamment autour de ce point de soudure) ce qui nuit à la planéité de cet élément métallique et peut nécessiter un usinage de la surface de cet élément métallique.

De manière additionnelle et lorsque le premier élément métallique et/ou le deuxième élément métallique est couvert par une couche de vernis (notamment un vernis isolant), il convient, préalablement à l'opération de soudage, d'éliminer la couche de vernis ce qui se traduit par un allongement de la durée du soudage et par un renchérissement du coût du soudage.

Pour remédier à certains inconvénients de ce premier type de soudage, il a été imaginé un deuxième type de soudage qui consiste en un soudage par un faisceau laser, usuellement dénommé soudure laser.

Ce deuxième type de soudage présente, lui aussi, un certain nombre d'inconvénients.

En fait, ce deuxième type de soudage consiste usuellement à réaliser un soudage par transparence c'est-à-dire à travers l'un des éléments métalliques, plus particulièrement à travers l'élément métallique le plus fin.

Un premier inconvénient consiste, alors, en ce qu'un tel soudage impose d'assurer un contact parfait entre les éléments à assembler, ceci au plus proche du faisceau laser.

Un autre inconvénient consiste en ce que le faisceau laser doit traverser l'épaisseur de l'un des éléments métalliques avant de fusionner avec l'autre élément métallique ce qui produit un échauffement important.

De plus, cet échauffement important est susceptible d'occasionner des déformations importantes à l'un au moins des éléments métalliques, notamment au niveau de la soudure.

Finalement, ce deuxième type de soudage consiste à réaliser un soudage à partir de la face postérieure de l'un des éléments métalliques dont la face antérieure reçoit l'autre des éléments métalliques. La réalisation de ce soudage entraîne souvent la formation d'une surépaisseur (notamment sous la forme d'un andain de matière) au niveau de la face postérieure (notamment au niveau du point de soudure) ce qui nuit à la planéité de cet élément métallique et nécessite un usinage de la surface de cet élément métallique.

La présente invention se veut à même de remédier, au moins en partie, aux inconvénients des procédés de soudage de l'état de la technique.

A cet effet, l'invention concerne un dispositif de soudage d'au moins un premier élément métallique sur un deuxième élément métallique. Ce dispositif de soudage comporte, d'une part, au moins un châssis et, d'autre part, au moins un moyen de soudage laser ainsi qu'au moins un moyen de fixation dudit au moins un moyen de soudage laser sur le châssis. Ce dispositif de soudage est caractérisé par le fait qu'il comporte, encore, d'une part, des moyens de pression qui sont configurés pour exercer une pression sur ledit au moins un premier élément métallique et en direction du deuxième élément métallique, ceci en sorte que ledit au moins un premier élément métallique prenne appui contre le deuxième élément métallique et, d'autre part, d'autre part, des moyens de montage de ces moyens de pression sur le châssis.

Selon une autre caractéristique, le dispositif de soudage comporte des moyens de préhension qui sont configurés pour saisir ledit au moins un premier élément métallique en vue de son dépôt sur le deuxième élément métallique.

Encore une autre caractéristique concerne le fait que le dispositif de soudage comporte des moyens d'aspiration de l'air, qui équipent le châssis, et qui sont configurés pour aspirer les fumées de soudage et/ou pour assurer un refroidissement du dispositif de soudage.

L'invention concerne, également, une installation de soudage d'au moins un premier élément métallique sur un deuxième élément métallique. Cette installation de soudage comporte, d'une part, un support sur lequel le deuxième élément métallique est déposé, et, d'autre part, un dispositif de soudage dudit au moins un premier élément métallique sur le deuxième élément métallique. Cette installation est caractérisée par le fait que, d'une part, le dispositif de soudage présente les caractéristiques décrites ci-dessus et, d'autre part, le support est au moins en partie constitué par un matériau qui présente une grande conductivité thermique.

L'invention concerne, aussi, un procédé de soudage d'au moins un premier élément métallique sur un deuxième élément métallique. Ce procédé de soudage comporte, d'une part, une étape d'appui qui consiste à exercer une pression sur ledit au moins un premier élément métallique et en direction du deuxième élément métallique, ceci en sorte que ledit au moins un premier élément métallique prenne appui contre le deuxième élément métallique et, d'autre part, une étape de soudage qui consiste à souder au laser ledit au moins un premier élément métallique sur le deuxième élément métallique, ceci alors que ledit au moins un premier élément métallique est maintenu en appui contre le deuxième élément métallique.

Selon une autre caractéristique, le deuxième élément métallique présente, d'une part, une face postérieure destinée à venir reposer sur un support, d'autre part, une face antérieure, qui est opposée à la face postérieure, et contre laquelle ledit au moins un premier élément métallique prend appui. Le procédé de soudage comporte, alors et préalablement à l'étape de soudage, une étape de positionnement au cours de laquelle au moins un moyen de soudage est positionné du côté de la face antérieure du deuxième élément métallique, ceci à proximité de cette face antérieure ainsi qu'à proximité dudit au moins un premier élément métallique, l'étape de soudage étant alors effectuée du côté de la face antérieure du deuxième élément métallique.

Une autre caractéristique concerne le fait que, préalablement à l'étape d'appui et à l'étape de soudage, le procédé de soudage comporte une étape de dépose qui consiste à déposer le deuxième élément métallique sur un support qui est au moins en partie constitué par un matériau qui présente une grande conductivité thermique.

L'invention concerne, encore, un procédé de fabrication d'un appareil électrique de forte puissance, qui est refroidi par circulation d'air, qui comporte, d'une part, une pluralité de plaques métalliques magnétiques parallèles empilées et, d'autre part, une pluralité d'espaceurs métalliques, qui sont interposés entre deux plaques métalliques magnétiques adjacentes parmi la pluralité de plaques métalliques magnétiques, et qui sont soudés sur au moins l'une des deux plaques métalliques magnétiques adjacentes parmi la pluralité de plaques métalliques magnétiques. Ce procédé de fabrication comporte un procédé de soudage d'au moins un premier élément métallique qui est constitué par au moins un espaceur métallique parmi la pluralité d'espaceurs métalliques sur un deuxième élément métallique qui est constitué par une plaque métallique magnétique parmi la pluralité de plaques métalliques magnétiques. Ce procédé de fabrication est caractérisé par le fait que le procédé de soudage comporte :
- une étape d'appui qui consiste à exercer une pression sur ledit au moins un premier élément métallique et en direction du deuxième élément métallique, ceci en sorte que ledit au moins un premier élément métallique prenne appui contre le deuxième élément métallique et ;
- une étape de soudage qui consiste à souder au laser ledit au moins un premier élément métallique sur le deuxième élément métallique, ceci alors que ledit au moins un premier élément métallique est maintenu en appui contre le deuxième élément métallique.

Selon une autre caractéristique, dans ce procédé de fabrication le deuxième élément métallique présente, d'une part, une face postérieure destinée à venir reposer sur un support, d'autre part, une face antérieure, qui est opposée à la face postérieure, qui est orientée en direction dudit au moins un premier élément métallique, et contre laquelle ledit au moins un premier élément métallique prend appui tandis que le procédé de soudage comporte, préalablement à l'étape de soudage, une étape de positionnement au cours de laquelle au moins un moyen de soudage laser est positionné du côté de la face antérieure du deuxième élément métallique, l'étape de soudage étant alors effectuée, d'une part, du côté de la face antérieure du deuxième élément métallique et, d'autre part, avec une puissance ajustée en sorte de réaliser une zone fusionnée, qui est localisée du côté de la face antérieure du deuxième élément métallique, et dont l'épaisseur est inférieure à l'épaisseur du deuxième élément métallique.

Finalement, l'invention concerne un appareil électrique de forte puissance, qui est refroidi par circulation d'air, et qui comporte, d'une part, une pluralité de plaques métalliques magnétiques parallèles empilées et, d'autre part, une pluralité d'espaceurs métalliques, qui sont interposés entre deux plaques métalliques magnétiques adjacentes parmi la pluralité de plaques métalliques magnétiques, et qui sont soudés sur au moins l'une des deux plaques métalliques magnétiques adjacentes parmi la pluralité de plaques métalliques magnétiques. Cet appareil électrique de forte puissance est caractérisé par le fait qu'il comporte :
- d'une part, au moins un premier élément métallique, qui est constitué par au moins un espaceur métallique parmi la pluralité d'espaceurs métalliques, et qui présente une face d'appui, une première face latérale qui s'étend à partir de la face d'appui, et une deuxième face latérale qui s'étend à partir de la face d'appui ;
- d'autre part, un deuxième élément métallique, qui est constitué par une plaque métallique magnétique parmi la pluralité de plaques métalliques magnétiques, et contre lequel la face d'appui dudit au moins un premier élément métallique prend appui ;
- d'autre part encore, au moins une soudure qui soude, d'une part, le deuxième élément métallique et, d'autre part, au moins la première face latérale dudit au moins un premier élément métallique et/ou au moins la deuxième face latérale dudit au moins un premier élément métallique.

Selon une autre caractéristique, dans cet appareil de forte puissance, le deuxième élément métallique présente, d'une part, une face postérieure, d'autre part, une face antérieure, qui est opposée à la face postérieure, qui est orientée en direction dudit au moins un premier élément métallique, et contre laquelle ledit au moins un premier élément métallique prend appui tandis que ladite au moins une soudure est constituée par une zone fusionnée, qui est localisée du côté de la face antérieure du deuxième élément métallique, et dont l'épaisseur est inférieure à l'épaisseur du deuxième élément métallique.

Ainsi, le dispositif de soudage comporte des moyens de pression qui sont configurés pour exercer une pression sur ledit au moins un premier élément métallique et en direction du deuxième élément métallique, ceci en sorte que ledit au moins un premier élément métallique prenne appui contre le deuxième élément métallique. Parallèlement, le procédé de soudage comporte une étape d'appui qui consiste à exercer une pression sur ledit au moins un premier élément métallique et en direction du deuxième élément métallique, ceci en sorte que ledit au moins un premier élément métallique prenne appui contre le deuxième élément métallique.

Ces moyens de pression et/ou cette étape d'appui permettent avantageusement de faire en sorte que ledit au moins un premier élément métallique prenne appui contre le deuxième élément métallique ce qui permet d'assurer un contact parfait entre les éléments à souder et améliore de manière notable la qualité du soudage de ces éléments.

De manière additionnelle, le procédé de soudage comporte, préalablement à l'étape de soudage, une étape de positionnement au cours de laquelle au moins un moyen de soudage est positionné du côté de la face antérieure du deuxième élément métallique (notamment à proximité de cette face antérieure ainsi qu'à proximité dudit au moins un premier élément métallique), l'étape de soudage étant alors effectuée du côté de la face antérieure du deuxième élément métallique ainsi qu'avec une puissance ajustée en sorte de réaliser une zone fusionnée, localisée du côté de la face antérieure du deuxième élément métallique, et dont l'épaisseur est inférieure à l'épaisseur du deuxième élément métallique. Ces caractéristiques permettent, de manière avantageuse, d'éviter la formation d'une surépaisseur ou d'une déformation au niveau de la face postérieure du deuxième élément métallique ce qui permet de conserver la planéité de ce deuxième élément métallique et évite l'usinage de la surface de ce deuxième élément métallique.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

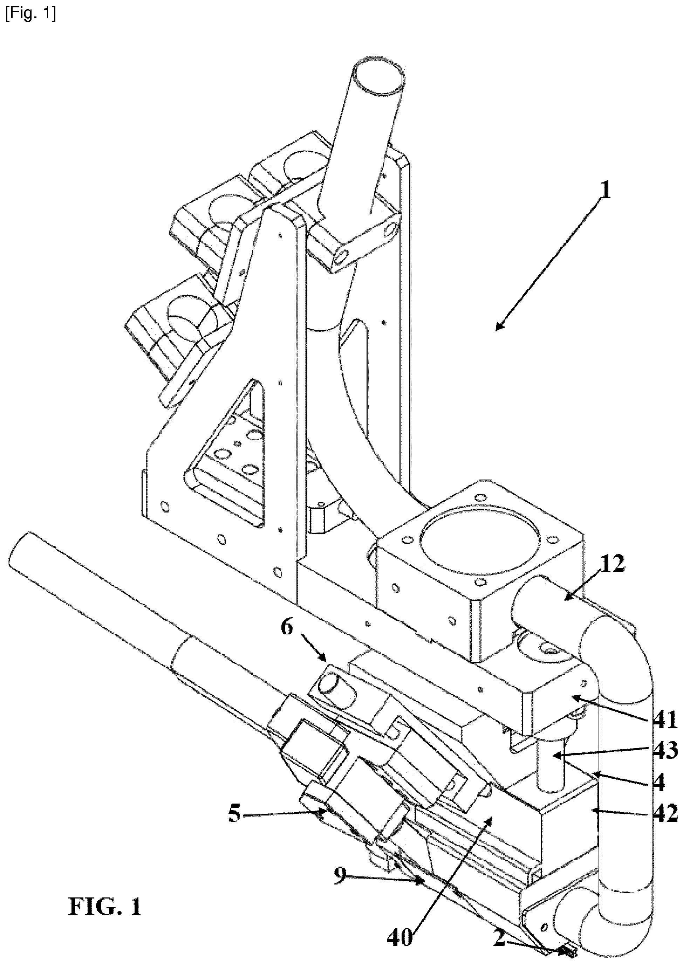

[Fig.1] représente une vue schématisée et en perspective d'un dispositif de soudage conforme à l'invention.

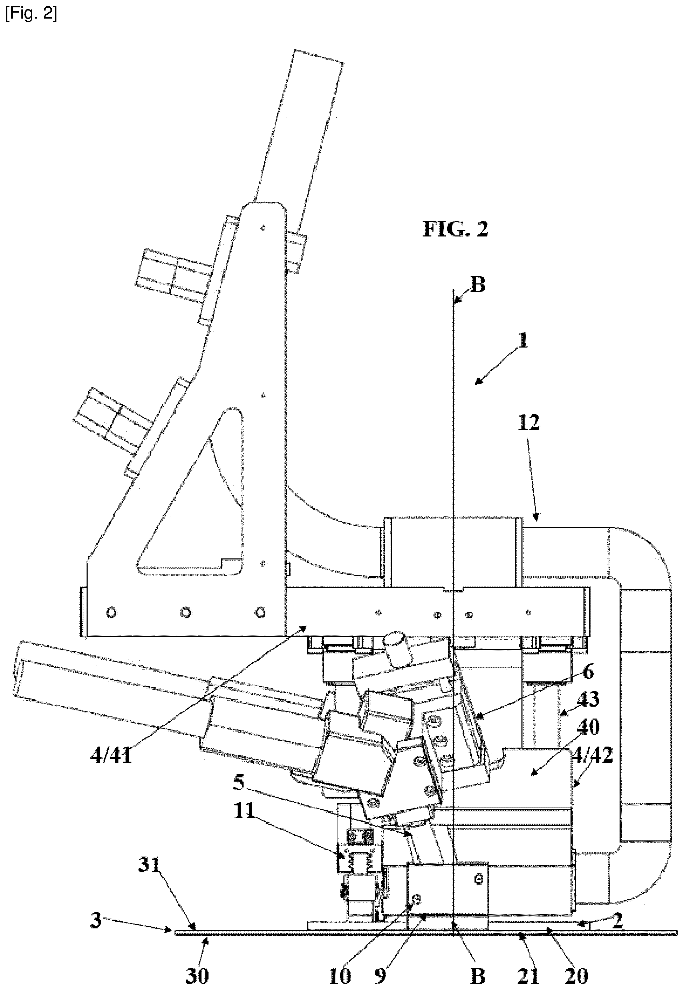

[Fig.2] représente une vue schématisée et de côté du dispositif de soudage illustré figure 1.

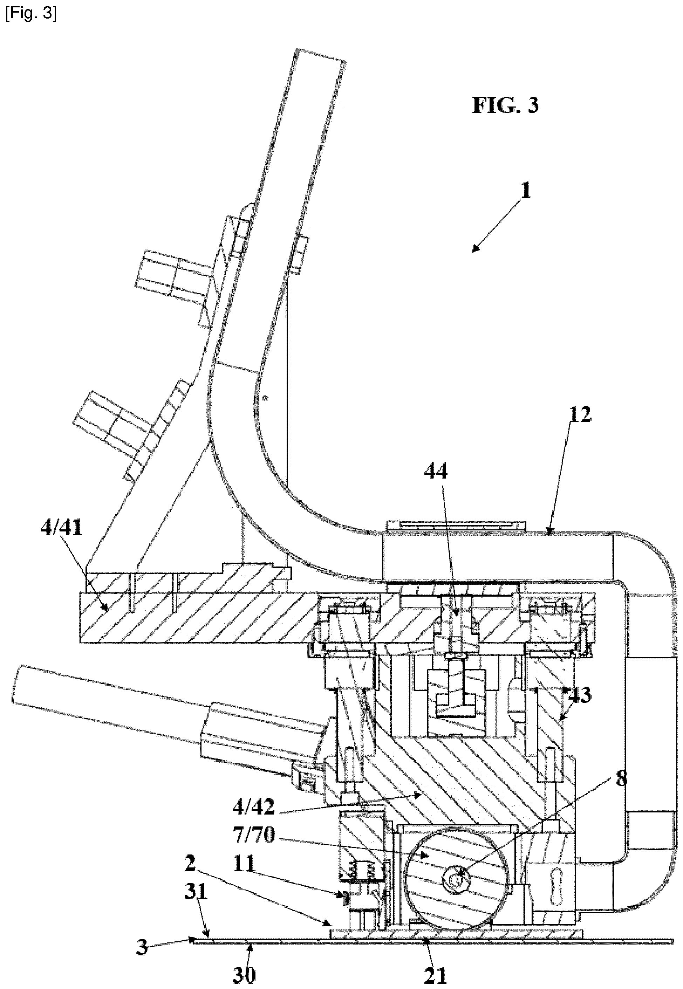

[Fig.3] représente une vue schématisée, de côté et en coupe longitudinale selon A-A du dispositif de soudage illustré figures 1 et 2.

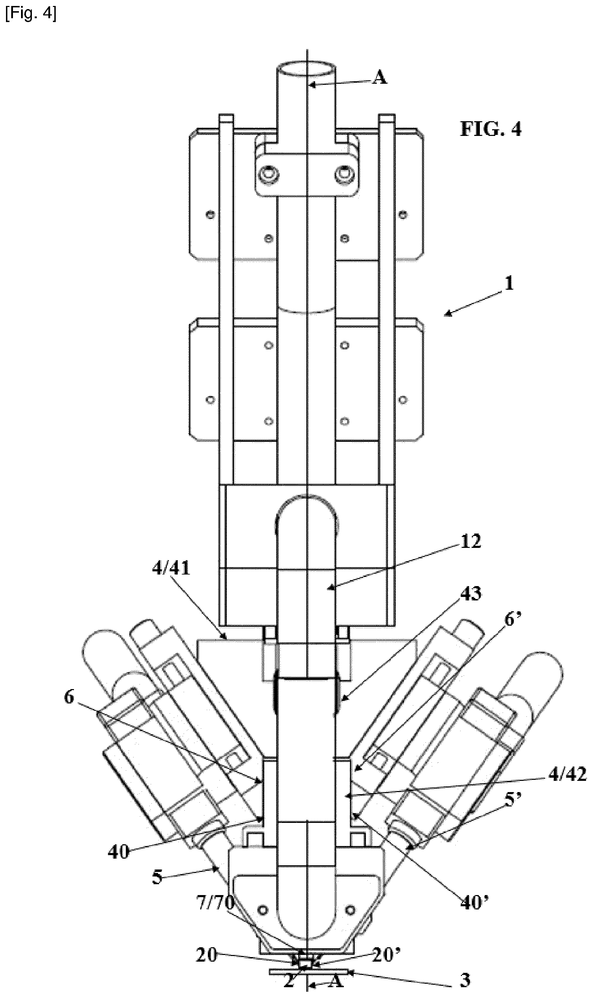

[Fig.4] représente une vue schématisée et de face du dispositif de soudage illustré figures 1 à 3.

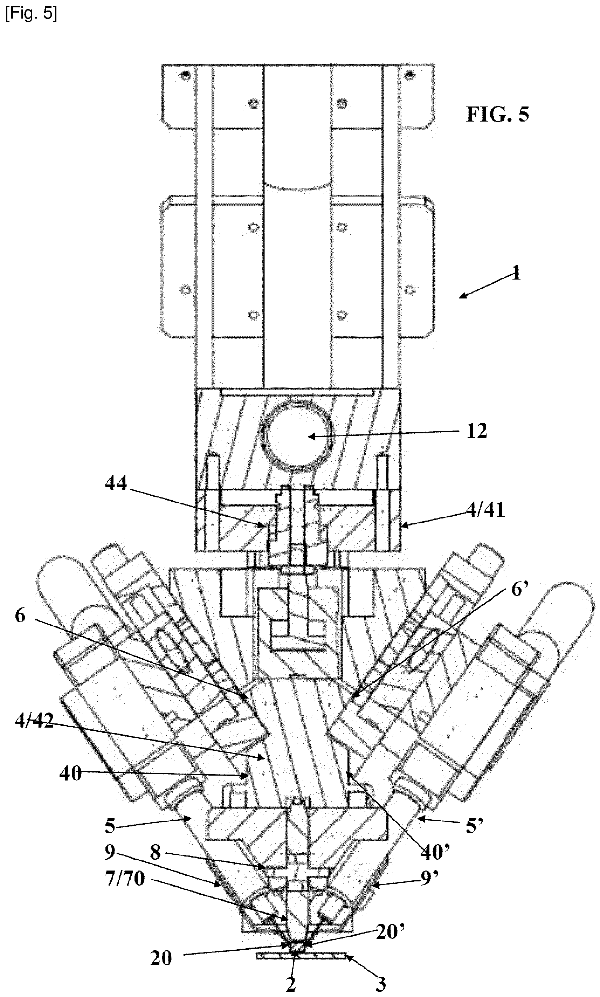

[Fig.5] représente une vue schématisée, de face et en coupe transversale selon B-B du dispositif de soudage illustré figures 1 à 4.

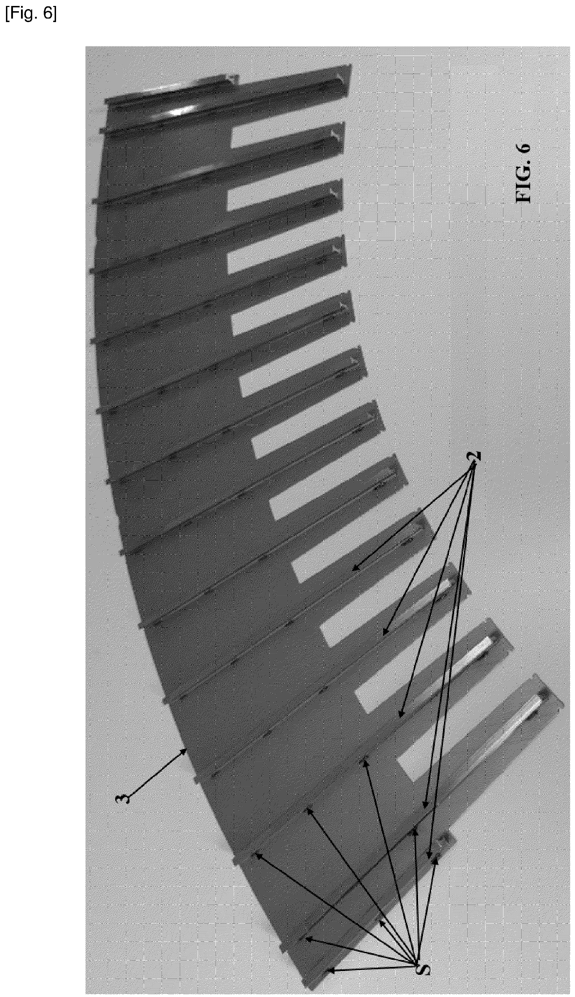

[Fig.6] représente une vue schématisée et en perspective d'une partie d'un appareil électrique de forte puissance conforme à l'invention.

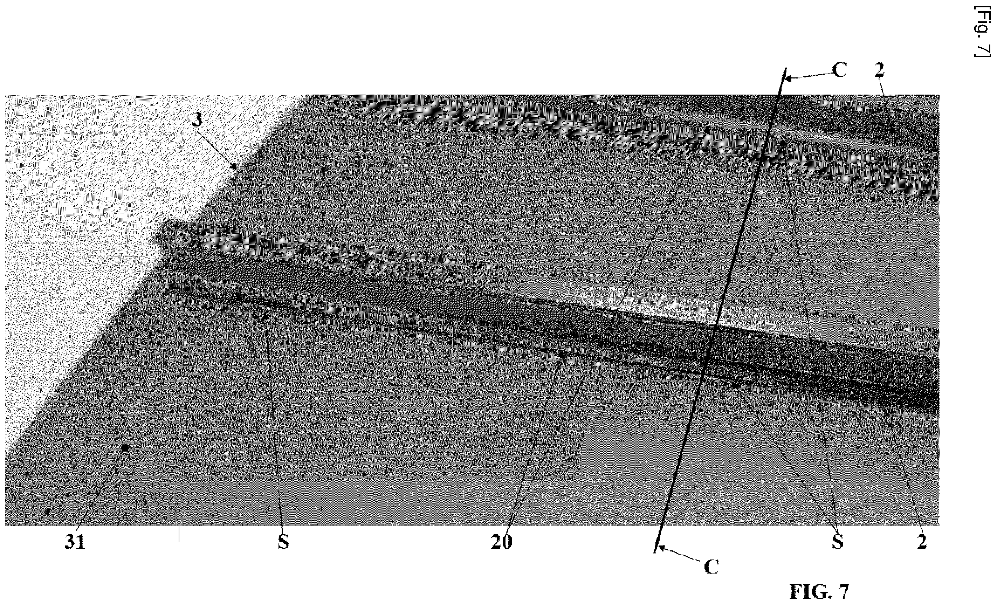

[Fig.7] représente une vue schématisée et en perspective d'un détail de la partie de l'appareil électrique de forte puissance illustrée figure 6.

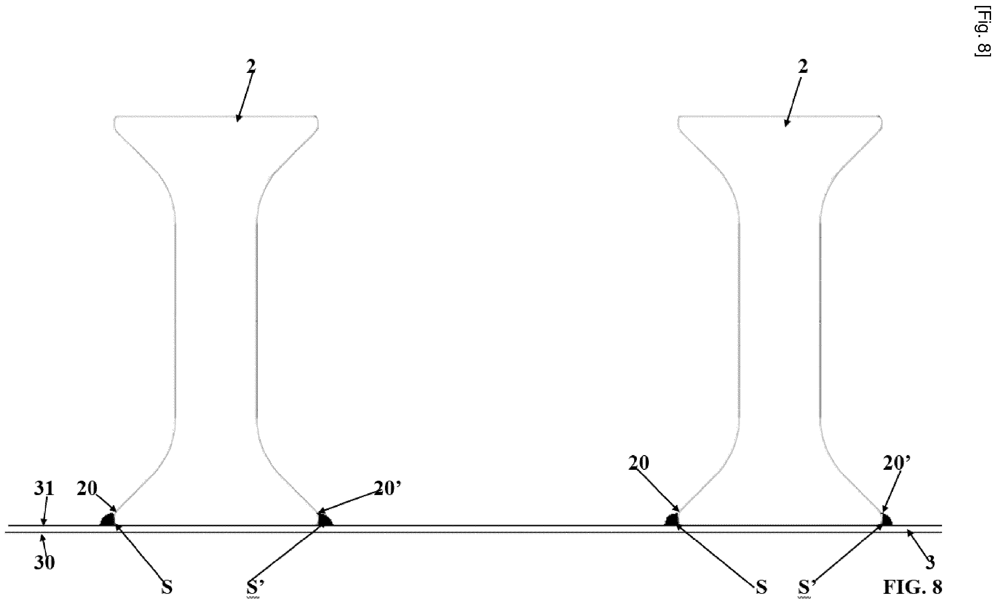

[Fig.8] représente une vue schématisée, de côté et en coupe selon C-C du détail de la partie de l'appareil électrique de forte puissance illustré figure 7.

L'invention concerne le domaine du soudage d'un élément métallique sur un autre élément métallique, plus particulièrement, le domaine du soudage d'un élément métallique sur un autre élément métallique magnétique.

L'invention concerne, alors, un dispositif de soudage 1 d'au moins un premier élément métallique 2 sur un deuxième élément métallique 3.

Ce dispositif de soudage 1 comporte au moins un châssis 4 qui est configuré pour être rendu solidaire d'un système de déplacement, qui est configuré pour assurer le déplacement dudit châssis 4 (et, donc, du dispositif de soudage 1) selon au moins trois axes, et qui peut être de type motorisé et/ou robotisé, notamment sous la forme d'un robot multiaxe à bras articulé.

Un tel châssis 4 comporte un premier côté 40 et un deuxième côté 40', ce premier côté 40 et ce deuxième côté 40' étant symétriques par rapport à un plan médian selon lequel le châssis 4 s'étend.

Selon une autre caractéristique, ce châssis 4 comporte, d'une part, une première partie 41 de châssis 4 qui est configurée pour être rendue solidaire d'un système de déplacement tel que mentionné ci-dessus, d'autre part, une deuxième partie 42 de châssis 4 qui est mobile par rapport à la première partie 41 de châssis 4, d'autre part encore, des moyens de montage en déplacement 43 (plus particulièrement en translation selon une direction parallèle au plan médian selon lequel le châssis 4 s'étend) de la deuxième partie 42 de châssis 4 par rapport à la première partie 41 de châssis 4 et, d'autre part encore, des moyens d'entraînement en déplacement 44 de la deuxième partie 42 de châssis 4 par rapport à la première partie 41 de châssis 4.

Ce dispositif de soudage 1 comporte, encore, au moins un moyen de soudage laser (5 ; 5') ainsi qu'au moins un moyen de fixation (6 ; 6') dudit au moins un moyen de soudage laser (5 ; 5') sur le châssis 4, plus particulièrement sur la deuxième partie 42 de ce châssis 4.

Selon un mode de réalisation préféré illustré sur les figures en annexe, ce dispositif de soudage 1 comporte, d'une part, deux moyens de soudage laser (5 ; 5'), d'autre part, un premier moyen de fixation 6 d'un premier moyen de soudage laser 5 parmi les deux moyens de soudage laser (5 ; 5'), ceci sur le premier côté 40 du châssis 4 (que comporte, alors, plus particulièrement la deuxième partie 42 de châssis 4) et, d'autre part, un deuxième moyen de fixation 6' d'un deuxième moyen de soudage laser 5' parmi les deux moyens de soudage laser (5 ; 5'), ceci sur le deuxième côté 40' du châssis 4 (que comporte, alors également, plus particulièrement la deuxième partie 42 de châssis 4).

Tel que visible sur les figures en annexe, le premier moyen de soudage laser 5 et le deuxième moyen de soudage laser 5' sont symétriques par rapport au plan médian selon lequel le châssis 4 s'étend.

Selon une autre caractéristique, ledit au moins un moyen de soudage laser (5 ; 5') comporte, chacun, une torche de soudage laser, plus particulièrement est constitué chacun par une telle torche de soudage laser.

De manière alternative, ledit au moins un moyen de soudage laser (5 ; 5') comporte, chacun, un laser à fibre, plus particulièrement est constitué chacun par un tel laser à fibre.

A ce propos, on observera qu'un tel moyen de soudage laser (5 ; 5') présente une puissance comprise entre 1 et 1,5kW (kilowatts). Une telle puissance permet, avantageusement, d'une part, d'éviter la déformation dudit au moins un premier élément métallique 2 et/ou dudit deuxième élément métallique 3, d'autre part, d'assurer un soudage d'au moins un premier élément métallique 2 et d'un deuxième élément métallique 3 qui peuvent être dans des métaux différents ou présenter des nuances différentes d'un même métal (notamment des nuances différentes d'acier) et, d'autre part encore, d'assurer un soudage d'un élément métallique (2 ; 3) de faible épaisseur (notamment de l'ordre de quelques dixièmes de millimètre) sans occasionner de dégradation, voire (le cas échéant) de sublimer du vernis qui recouvre au moins une partie de la surface d'un tel élément métallique (2 ; 3).

Selon l'invention, le dispositif de soudage 1 comporte, encore, des moyens de pression 7 qui sont configurés pour exercer une pression sur ledit au moins un premier élément métallique 2 et en direction du deuxième élément métallique 3, ceci en sorte que ledit au moins un premier élément métallique 2 prenne appui (plus particulièrement fermement) contre le deuxième élément métallique 3.

Ces moyens de pression 7 comportent un organe de pression 70 qui est configuré pour exercer une pression sur ledit au moins un premier élément métallique 2. Un tel organe de pression 70 peut adopter la forme d'une roue (avantageusement configurée pour rouler sur ledit au moins un premier élément métallique 2), d'un galet, d'un doigt ou analogue.

Le dispositif de soudage 1 comporte, alors, également, des moyens de montage 8 de ces moyens de pression 7 sur le châssis 4, plus particulièrement sur la deuxième partie 42 de ce châssis 4.

A ce propos, on observera que, lorsque ledit organe de pression 70 adopte la forme d'une roue, ces moyens de montage 8 de ces moyens de pression 7 sur le châssis 4 comportent (plus particulièrement sont constitués par) des moyens de montage en rotation de ladite roue sur le châssis 4, plus particulièrement sur la deuxième partie 42 de ce châssis 4.

Tel que mentionné ci-dessus, le châssis 4 comporte une première partie 41 de châssis 4 ainsi qu'une deuxième partie 42 de châssis 4.

A ce propos, on observera que c'est, plus particulièrement, sur cette deuxième partie 42 de châssis 4 que, d'une part, ledit au moins un moyen de soudage laser (5 ; 5') est fixé, plus particulièrement par l'intermédiaire dudit au moins un moyen de fixation (6 ; 6') et, d'autre part, les moyens de pression 7 sont montés, plus particulièrement par l'intermédiaire des moyens de montage 8.

La présence des moyens de montage en déplacement 43 et des moyens d'entraînement en déplacement 44 de la deuxième partie 42 de châssis 4 par rapport à la première partie 41 de châssis 41 permet, alors, avantageusement (et, notamment, avant ou après avoir positionné le dispositif de soudage 1 par rapport audit au moins un premier élément métallique 2 et/ou par rapport audit deuxième élément métallique 3), d'ajuster et de gérer la pression exercée par les moyens de pression 7 sur ledit au moins un premier élément métallique 2, ceci par l'intermédiaire de moyens économiques (notamment par rapport à des moyens d'ajustement et de gestion liés à un système de déplacement tel que mentionné ci-dessus), faciles à mettre en œuvre, et permettant un ajustement fin et une gestion fine de cette pression exercée.

Une autre caractéristique concerne le fait que le dispositif de soudage 1 comporte, d'une part, au moins un carter latéral (9 ; 9'), qui est configuré pour occulter au moins un faisceau laser émis par ledit au moins un moyen de soudage laser (5 ; 5'), et qui est positionné au plus proche dudit au moins un faisceau laser et, d'autre part, des moyens de fixation (10 ; 10') dudit au moins un carter latéral (9 ; 9') sur le châssis 4, plus particulièrement sur la deuxième partie 42 de châssis 4 et/ou sur l'un des côtés (40 ; 40') du châssis 4.

La présence d'un tel carter latéral (9 ; 9') permet avantageusement de confiner ledit au moins un faisceau laser émis par ledit au moins un moyen de soudage laser (5 ; 5'), ceci à l'intérieur du dispositif de soudage 1.

Selon un mode de réalisation préféré, le dispositif de soudage 1 comporte deux carters latéraux (9 ; 9') qui sont configurés, chacun, pour occulter le faisceau laser émis par l'un des deux moyens de soudage laser (5 ; 5') mentionnés ci-dessus. Les moyens de fixation (10 ; 10') sont alors configurés pour fixer, d'une part, un premier carter latéral 9 parmi les deux carters latéraux (9 ; 9') sur le premier côté 40 du châssis 4 (que comporte, alors, plus particulièrement la deuxième partie 42 de châssis 4) et, d'autre part, un deuxième carter latéral 9' parmi les deux carters latéraux (9 ; 9') sur le deuxième côté 40' du châssis 4 (que comporte, alors, plus particulièrement la deuxième partie 42 de châssis 4).

En ce qui concerne les moyens de fixation (10 ; 10'), ceux-ci peuvent adopter la forme, d'une part, d'au moins un orifice que ledit au moins un carter latéral (9 ; 9') comporte et d'autre part, d'au moins une vis, qui traverse un tel orifice, et qui coopère avec le châssis 4, plus particulièrement avec la deuxième partie 42 de châssis 4.

Une autre caractéristique concerne, alors, le fait que le dispositif de soudage 1 comporte des moyens de réglage de la position dudit au moins un carter latéral (9 ; 9') par rapport au châssis 4, plus particulièrement par rapport à la deuxième partie 42 de châssis 4.

Ces moyens de réglage permettent, alors avantageusement, de régler la hauteur dudit au moins un carter latéral (9 ; 9') par rapport au deuxième élément métallique 3, ceci en fonction de la hauteur dudit au moins un premier élément métallique 2. Ces moyens de réglage permettent, alors, d'optimiser le confinement dudit au moins un faisceau laser émis par ledit au moins un moyen de soudage laser (5 ; 5'), ceci à l'intérieur du dispositif de soudage 1.

En fait, de tels moyens de réglage peuvent être constitués par ledit au moins un orifice, que ledit au moins un carter latéral (9, 9') comporte, et qui présente une forme oblongue.

Une autre caractéristique concerne le fait que le dispositif de soudage 1 comporte des moyens de préhension 11 qui sont configurés pour saisir ledit au moins un premier élément métallique 2 (plus particulièrement dans au moins un endroit référencé), ceci en vue de son dépôt sur le deuxième élément métallique 3.

De tels moyens de préhension 11 peuvent adopter la forme d'une ventouse, d'une pince ou analogue.

Encore une autre caractéristique concerne le fait que le dispositif de soudage 1 comporte des moyens d'aspiration de l'air 12, qui équipent le châssis 4, et qui sont configurés pour aspirer les fumées de soudage (voire les fumées de sublimation d'un vernis qui revêt ledit au moins un premier élément métallique 2 et/ou ledit deuxième élément métallique 3) et/ou pour assurer un refroidissement du dispositif de soudage 1.

L'invention concerne, également, une installation de soudage d'au moins un premier élément métallique 2 sur un deuxième élément métallique 3.

Cette installation de soudage comporte, d'une part, un support sur lequel le deuxième élément métallique 3 est déposé, et, d'autre part, un dispositif de soudage 1 dudit au moins un premier élément métallique 2 sur le deuxième élément métallique 3.

Selon l'invention, le dispositif de soudage 1 présente les caractéristiques décrites ci-dessus.

Egalement selon l'invention, ledit support est au moins en partie constitué par un matériau qui présente une grande conductivité thermique. Cette caractéristique permet, avantageusement, d'absorber au maximum l'énergie thermique émise par le soudage.

En fait et selon un mode de réalisation préféré le support peut être constitué par une plaque (plus particulièrement plane) qui incorpore du cuivre, voire qui est constituée au moins en partie (voire intégralement) par du cuivre.

L'invention concerne, également, un procédé de soudage d'au moins un premier élément métallique 2 sur un deuxième élément métallique 3.

Ce procédé de soudage comporte, d'une part, une étape d'appui qui consiste à exercer une pression sur ledit au moins un premier élément métallique 2 et en direction du deuxième élément métallique 3, ceci en sorte que ledit au moins un premier élément métallique 2 prenne appui (plus particulièrement fermement) contre le deuxième élément métallique 3 et, d'autre part, une étape de soudage qui consiste à souder au laser ledit au moins un premier élément métallique 2 sur le deuxième élément métallique 3, ceci alors que ledit au moins un premier élément métallique 2 est maintenu en appui contre le deuxième élément métallique 3.

On observera que ce procédé de soudage peut, au moins en partie, être mis en œuvre par le dispositif de soudage 1 décrit ci-dessus.

On observera, également, que le deuxième élément métallique 3 comporte, d'une part, une face postérieure 30 qui est destinée à venir reposer sur un support (notamment tel que mentionné ci-dessus) et, d'autre part, une face antérieure 31, qui est opposée à la face postérieure 30, qui est orientée en direction dudit au moins un premier élément métallique 2, et contre laquelle ledit au moins un premier élément métallique 2 prend appui.

Le procédé de soudage comporte, alors, préalablement à l'étape de soudage, une étape de positionnement au cours de laquelle au moins un moyen de soudage laser (5 ; 5') est positionné du côté de la face antérieure 31 du deuxième élément métallique 3, ceci à proximité de cette face antérieure 31 ainsi qu'à proximité dudit au moins un premier élément métallique 2, plus particulièrement à proximité d'au moins une face latérale (20 ; 20') que comporte ledit au moins un premier élément métallique 2. L'étape de soudage est alors effectuée du côté de la face antérieure 31 du deuxième élément métallique 3.

Cette caractéristique permet, avantageusement, d'éviter toute déformation et/ou toute surépaisseur au niveau de la face postérieure 30 du deuxième élément métallique 3.

De manière préférentielle, ce procédé de soudage comporte, alors, préalablement à l'étape de soudage, une étape de positionnement au cours de laquelle, d'une part, un premier moyen de soudage laser 5 est positionné du côté de la face antérieure 31 du deuxième élément métallique 3, ceci à proximité de cette face antérieure 31 ainsi qu'à proximité dudit au moins un premier élément métallique 2, plus particulièrement à proximité d'une première face latérale 20 que comporte ledit au moins un premier élément métallique 2 et, d'autre part, un deuxième moyen de soudage laser 5' est positionné du côté de la face antérieure 31 du deuxième élément métallique 3, ceci à proximité de cette face antérieure 31 ainsi qu'à proximité dudit au moins un premier élément métallique 2, plus particulièrement à proximité d'une deuxième face latérale 20', que comporte ledit au moins un premier élément métallique 2, et qui est opposée à la première face latérale 20, voire qui est symétrique à cette première face latérale 20 par rapport à un plan médian selon lequel ledit au moins un élément métallique 2 s'étend. L'étape de soudage est alors effectuée du côté de la face antérieure 31 du deuxième élément métallique 3, ceci de part et d'autre dudit au moins un premier élément métallique 2.

Selon une autre caractéristique de ce procédé de soudage, l'étape d'appui est mise en œuvre de manière simultanée à l'étape de positionnement dudit au moins un moyen de soudage laser (5 ; 5').

Ledit au moins un moyen de soudage laser (5 ; 5') présente les caractéristiques décrites ci-dessus.

Selon une autre caractéristique, ledit au moins un premier élément métallique 2 présente, encore, une face d'appui 21 qui est configurée pour prendre appui contre le deuxième élément métallique 3, plus particulièrement contre la face antérieure 31 de ce deuxième élément métallique 3.

Dans ce cas, la première face latérale 20 et la deuxième face latérale 20' dudit au moins un élément métallique 2 s'étendent à partir de la face d'appui 21

L'étape de soudage consiste, alors, à souder, sur le deuxième élément métallique 3 (plus particulièrement sur la face antérieure 31 de ce deuxième élément métallique 3), la face d'appui 21 et/ou au moins la première face latérale 20 et/ou au moins la deuxième face latérale 20' dudit au moins un premier élément métallique 2.

Tel que mentionné ci-dessus, la première face latérale 20 et la deuxième face latérale 20' dudit au moins un élément métallique 2 sont symétriques par rapport à un plan médian selon lequel ledit au moins un premier élément métallique 2 s'étend.

L'étape de soudage consiste, alors, à souder la première face latérale 20 et la deuxième face latérale 20' dudit au moins un élément métallique 2 sur le deuxième élément métallique 3, ceci de manière symétrique ou de manière décalée par rapport audit plan médian.

Une autre caractéristique du procédé de soudage consiste en ce que, préalablement à l'étape d'appui et à l'étape de soudage, le procédé de soudage comporte une étape de dépose qui consiste à déposer le deuxième élément métallique 3 sur un support qui est au moins en partie constitué par un matériau qui présente une grande conductivité thermique, plus particulièrement un support qui présente les caractéristiques décrites ci-dessus.

Encore une autre caractéristique consiste en ce que, d'une part, le deuxième élément métallique 3 est constitué par une plaque magnétique (plus particulièrement sous la forme d'une tôle plane réalisée en un matériau magnétique), d'autre part, ledit au moins un premier élément métallique 2 est constitué par un espaceur (plus particulièrement sous la forme d'un profilé) qui est destiné à être positionné et soudé sur ladite plaque magnétique qui constitue le deuxième élément métallique 3 ainsi qu'à être interposé entre ladite plaque magnétique qui constitue le deuxième élément métallique 3 et un autre élément métallique qui est constitué par une autre plaque magnétique (plus particulièrement sous la forme d'une tôle plane réalisée en un matériau magnétique) qui est parallèle à ladite plaque magnétique qui constitue le deuxième élément métallique 3.

L'invention concerne, également, un procédé de fabrication d'un appareil électrique de forte puissance qui est refroidi par circulation d'air.

Un tel appareil électrique de forte puissance peut être un moteur ou un générateur qu'il est possible de trouver dans le domaine de l'industrie lourde (plus particulièrement dans les aciéries, dans les cimenteries ou autres), dans le domaine de la production d'énergie (plus particulièrement hydroélectrique, nucléaire, thermique, éolienne ou autre) ou dans le domaine de la motorisation pour la propulsion maritime.

Un tel appareil électrique de forte puissance peut présenter une puissance qui est supérieure à 2 Mégawatts. A ce propos, on observera qu'une telle puissance peut être supérieure à 100 Mégawatts (comme, par exemple, pour des applications hydroélectriques), voire supérieure à 1000 Mégawatts (comme, par exemple, pour des applications électronucléaires), notamment comprise entre 1500 et 2000 Mégawatts.

Un tel appareil électrique comporte, d'une part, un stator et, d'autre part, un rotor qui est configuré pour tourner par rapport au stator.

Un tel appareil électrique (plus particulièrement le stator et/ou le rotor d'un tel appareil électrique) comporte, d'une part, une pluralité de plaques (plus particulièrement sous la forme d'une pluralité de tôles planes) métalliques magnétiques parallèles empilées et, d'autre part, une pluralité d'espaceurs (plus particulièrement sous la forme d'une pluralité de profilés) métalliques, qui sont interposés entre deux plaques métalliques magnétiques adjacentes parmi la pluralité de plaques métalliques magnétiques, et qui sont soudés sur au moins l'une des deux plaques métalliques magnétiques adjacentes parmi la pluralité de plaques métalliques magnétiques.

A ce propos, on observera que, lors du fonctionnement d'un tel appareil électrique de forte puissance, des courants de Foucault sont induits dans les plaques métalliques magnétiques en raison des variations du champ magnétique. Ces courants de Foucault circulent dans le matériau ferromagnétique et génèrent de la chaleur par effet Joule qu'il est nécessaire d'évacuer. L'évacuation de cette chaleur est assurée par une ventilation forcée, plus particulièrement par un flux d'air, qui circule entre les plaques métalliques magnétiques espacées par l'intermédiaire des espaceurs, et qui permet de refroidir l'appareil électrique.

L'invention concerne, alors, un procédé de fabrication d'un tel appareil électrique de forte puissance, notamment un procédé de fabrication d'au moins un composant (plus particulièrement un composant du rotor et/ou du stator) qu'un tel appareil de forte puissance comporte.

Ce procédé de fabrication comporte un procédé de soudage, qui présente les caractéristiques décrites ci-dessus, et dans lequel, d'une part, le deuxième élément métallique 3 est constitué par une plaque (notamment une tôle plane) métallique magnétique parmi la pluralité de plaques métalliques magnétiques et, d'autre part, ledit au moins un premier élément métallique 2 est constitué par au moins un espaceur (notamment sous la forme d'au moins un profilé) métallique parmi la pluralité d'espaceurs métalliques.

Ledit au moins un espaceur métallique est, également, destiné à être interposé entre ladite plaque métallique magnétique (qui constitue le deuxième élément métallique 3) et une autre plaque métallique magnétique (qui constitue un autre élément métallique) parmi la pluralité de plaques métalliques magnétiques qui est parallèle à ladite plaque magnétique (qui constitue le deuxième élément métallique 3).

Ce procédé de soudage permet, alors et en particulier, de fabriquer un composant (plus particulièrement un composant du rotor et/ou du stator), d'une part, qui est destiné à entrer dans la composition d'un tel appareil électrique de forte puissance et, d'autre part, qui comporte un tel deuxième élément métallique 3 ainsi qu'au moins un tel premier élément métallique 2, voire (et de préférence) une pluralité de tels premiers éléments métalliques 2.

Ce procédé de soudage consiste, alors, à souder au moins un tel premier élément métallique 2 qui est constitué par au moins un espaceur métallique parmi la pluralité d'espaceurs métalliques sur un tel deuxième élément métallique 3 qui est constitué par une plaque métallique magnétique parmi la pluralité de plaques métalliques magnétiques.

Ce procédé de soudage est caractérisé par le fait qu'il comporte :
- une étape d'appui qui consiste à exercer une pression sur ledit au moins un premier élément métallique 2 et en direction du deuxième élément métallique 3, ceci en sorte que ledit au moins un premier élément métallique 2 prenne appui contre le deuxième élément métallique 3 et ;
- une étape de soudage qui consiste à souder au laser ledit au moins un premier élément métallique 2 sur le deuxième élément métallique 3, ceci alors que ledit au moins un premier élément métallique 2 est maintenu en appui contre le deuxième élément métallique 3.

On observera que ledit au moins un espaceur métallique (qui constitue ledit au moins un premier élément métallique 2) est, alors, destiné à être positionné et soudé sur ladite plaque métallique magnétique (qui constitue le deuxième élément métallique 3), plus particulièrement sur la face antérieure de cette plaque métallique magnétique (plus particulièrement sur la face antérieure 31 dudit deuxième élément métallique 3).

Aussi et tel que mentionné ci-dessus, le deuxième élément métallique 3 présente, d'une part, une face postérieure 30 qui est destinée à venir reposer sur un support, d'autre part, une face antérieure 31, qui est opposée à la face postérieure 30, qui est orientée en direction dudit au moins un premier élément métallique 2, et contre laquelle ledit au moins un premier élément métallique 2 prend appui.

Le procédé de soudage comporte, alors, préalablement à l'étape de soudage, une étape de positionnement au cours de laquelle au moins un moyen de soudage laser (5 ; 5') est positionné du côté de la face antérieure 31 du deuxième élément métallique 3.

L'étape de soudage est alors effectuée du côté de la face antérieure 31 du deuxième élément métallique 3 ainsi qu'avec une puissance ajustée en sorte de réaliser une zone fusionnée, qui est localisée du côté de la face antérieure 31 du deuxième élément métallique 3, et dont l'épaisseur est inférieure à l'épaisseur du deuxième élément métallique 3.

Ces caractéristiques permettent, de manière avantageuse, d'éviter la formation d'une surépaisseur ou d'une déformation au niveau de la face postérieure 30 du deuxième élément métallique 3 ce qui permet de conserver la planéité de ce deuxième élément métallique 3 (plus particulièrement la planéité de la face postérieure 30 de ce deuxième élément métallique 3) et évite l'usinage de la surface de ce deuxième élément métallique 3, plus particulièrement l'usinage de cette face postérieure 30.

De manière additionnelle, ledit au moins un moyen de soudage laser (5 ; 5') peut être positionné à proximité de ladite face antérieure 31 (plus particulièrement à une distance comprise entre 20mm et 50 mm de cette face antérieure 31) ainsi qu'à proximité dudit au moins un premier élément métallique 2 (plus particulièrement à une distance comprise entre 20mm et 50 mm dudit au moins un premier élément métallique 2).

Tel que mentionné, également, ci-dessus, ledit au moins un premier élément métallique 2 présente, d'une part, une face d'appui 21 qui est configurée pour prendre appui contre le deuxième élément métallique 3, d'autre part, une première face latérale 20 qui s'étend à partir de la face d'appui 21, d'autre part encore, une deuxième face latérale 20' qui s'étend à partir de la face d'appui 21.

L'étape de soudage consiste, alors, à souder, sur le deuxième élément métallique 3 (plus particulièrement sur la face antérieure 31 de cet élément métallique 3), au moins la première face latérale 20 dudit au moins un premier élément métallique 2 et/ou au moins la deuxième face latérale 20' dudit au moins un premier élément métallique 2, voire encore la face d'appui 21. Là encore, l'étape de soudage est effectuée avec une puissance ajustée en sorte de réaliser du côté de la face antérieure 31 du deuxième élément métallique 3, une zone fusionnée qui présente les caractéristiques décrites ci-dessus.

Tel que mentionné, également, ci-dessus, la première face latérale 20 et la deuxième face latérale 20' dudit au moins un élément métallique 2 peuvent être symétriques par rapport à un plan médian selon lequel ledit au moins un premier élément métallique 2 s'étend.

L'étape de soudage consiste, alors, à souder la première face latérale 20 et la deuxième face latérale 20' dudit au moins un élément métallique 2 sur le deuxième élément métallique 3, ceci de manière symétrique ou de manière décalée par rapport audit plan médian.

Selon une autre caractéristique, l'étape de soudage peut consister à souder, sur le deuxième élément métallique 3, au moins la première face latérale 20 et au moins la deuxième face latérale 20' (voire encore la face d'appui 21) dudit au moins un premier élément métallique 2, ceci de manière simultanée ou de manière alternative.

Une autre caractéristique du procédé de fabrication consiste en ce que, préalablement à l'étape d'appui et à l'étape de soudage, le procédé de fabrication comporte une étape de dépose qui consiste à déposer le deuxième élément métallique 3 sur un support qui est au moins en partie constitué par un matériau qui présente une grande conductivité thermique.

En fait, le matériau qui présente une grande conductivité thermique incorpore du cuivre (plus particulièrement est constitué par du cuivre) et/ou présente une conductivité thermique supérieure à 300 W.m⁻¹.K⁻¹ à 20°C.

Selon un mode de réalisation particulier, le matériau qui présente une grande conductivité thermique peut être constitué par du cuivre qui présente une conductivité thermique de 390 W.m⁻¹.K⁻¹.

Encore une autre caractéristique consiste en ce que, au moins pendant l'étape de soudage, on assure un refroidissement d'au moins un dispositif de soudage 1 (plus particulièrement qui présente les caractéristiques décrites ci-dessus) qui est configuré pour mettre en œuvre l'étape de soudage. Un tel refroidissement peut être réalisé par aspiration d'air, plus particulièrement par l'intermédiaire des moyens d'aspiration de l'air 12 décrits ci-dessus.

Selon une autre caractéristique, l'étape de soudage, qui consiste à souder au laser, est mise en œuvre par au moins une torche de soudure laser, plus particulièrement par deux torches de soudure laser (notamment que comporte un dispositif de soudage 1 qui présente les caractéristiques décrites ci-dessus).

Selon une autre caractéristique, dans ce procédé, l'appareil électrique de forte puissance, d'une part, est un moteur ou un générateur et, d'autre part, présente une puissance qui est supérieure à 2 Mégawatts, notamment supérieure à 100 Mégawatts, voire supérieure à 1000 Mégawatts.

Egalement dans ce procédé, ledit au moins un deuxième élément métallique 3 contient au moins un acier doux (plus particulièrement est constitué par au moins un tel acier doux), plus particulièrement à grains non orientés (notamment de nuance M230 à M1300, de préférence de nuance M250, M400 ou M600) et/ou au moins un acier inoxydable (notamment de nuance 304L, 316L).

De manière alternative ou (et de préférence additionnelle), ledit au moins un deuxième élément métallique 3 présente une épaisseur comprise entre 0,3mm et 2mm, de préférence entre 0,4mm et 1,5mm, notamment de l'ordre de 0,5mm.

Egalement dans ce procédé, ledit au moins un premier élément métallique 2 contient au moins un métal (plus particulièrement est constitué par au moins un tel métal) qui présente une perméabilité magnétique inférieure à 1,2, de préférence inférieure à 1,1. Cette caractéristique permet, avantageusement, audit au moins un premier élément métallique 2 (espaceur) de ne pas perturber le flux magnétique à l'intérieur de l'empilement de la pluralité de plaques métalliques magnétiques parallèles empilées.

De manière alternative ou (et de préférence) additionnelle, ledit au moins un premier élément métallique 2 contient (plus particulièrement est constitué par) au moins un acier, plus particulièrement un acier doux et/ou un acier inoxydable, notamment un acier inoxydable austénitique (notamment de nuances 302HQ, 304L, 316L).

Finalement, l'invention concerne un appareil électrique de forte puissance qui est refroidi par circulation d'air.

Un tel appareil électrique est, plus particulièrement, obtenu en mettant en œuvre le procédé de fabrication décrit ci-dessus.

Un tel appareil électrique présente au moins une partie des caractéristiques décrites ci-dessus.

En particulier et tel que mentionné ci-dessus, un tel appareil électrique comporte, d'une part, une pluralité de plaques métalliques magnétiques parallèles empilées et, d'autre part, une pluralité d'espaceurs métalliques, qui sont interposés entre deux plaques métalliques magnétiques adjacentes parmi la pluralité de plaques métalliques magnétiques, et qui sont soudés sur au moins l'une des deux plaques métalliques magnétiques adjacentes parmi la pluralité de plaques métalliques magnétiques.

Tel que mentionné ci-dessus, un tel appareil électrique comporte au moins un premier élément métallique 2, qui est constitué par au moins un espaceur métallique parmi la pluralité d'espaceurs métalliques, et qui présente une face d'appui 21, une première face latérale 20 qui s'étend à partir de la face d'appui 21, et une deuxième face latérale 20' qui s'étend à partir de la face d'appui 21.

Un tel appareil électrique comporte, encore (et tel que mentionné ci-dessus), un deuxième élément métallique 3, qui est constitué par une plaque métallique magnétique parmi la pluralité de plaques métalliques magnétiques, et contre lequel la face d'appui 21 dudit au moins un premier élément métallique 2 prend appui.

Selon l'invention, cet appareil électrique de forte puissance comporte au moins une soudure (S ; S') qui soude, d'une part, le deuxième élément métallique 3 et, d'autre part, au moins la première face latérale 20 dudit au moins un premier élément métallique 2 et/ou au moins la deuxième face latérale 20' dudit au moins un premier élément métallique 2.

Tel que mentionné ci-dessus, le deuxième élément métallique 3 présente, d'une part, une face postérieure 30, d'autre part, une face antérieure 31, qui est opposée à la face postérieure 30, qui est orientée en direction dudit au moins un premier élément métallique 2, et contre laquelle ledit au moins un premier élément métallique 2 prend appui. Ladite au moins une soudure (S ; S') est, alors, constituée par une zone fusionnée, qui est localisée du côté de la face antérieure 31 du deuxième élément métallique 3, et dont l'épaisseur est inférieure à l'épaisseur du deuxième élément métallique 3.

Ces caractéristiques permettent, là encore et de manière avantageuse, d'éviter la formation d'une surépaisseur ou d'une déformation au niveau de la face postérieure 30 du deuxième élément métallique 3 ce qui permet de conserver la planéité de ce deuxième élément métallique 3 (plus particulièrement la planéité de la face postérieure 30 de ce deuxième élément métallique 3) et évite l'usinage de la surface de ce deuxième élément métallique 3, plus particulièrement l'usinage de cette face postérieure 30.

Selon une autre caractéristique, dans un tel appareil électrique, la première face latérale 20 et la deuxième face latérale 20' dudit au moins un premier élément métallique 2 sont symétriques par rapport à un plan médian selon lequel ledit au moins un premier élément métallique 2 s'étend.

Cet appareil électrique comporte, alors, au moins une première soudure S qui soude la première face latérale 20 dudit au moins un premier élément métallique 2 sur le deuxième élément métallique 3 ainsi qu'une deuxième soudure S' qui soude la deuxième face latérale 20' dudit au moins un premier élément métallique 2 sur le deuxième élément métallique 3. Cette première soudure S et cette deuxième soudure S' peuvent être décalées ou (et de préférence) symétriques par rapport audit plan médian.

Un tel appareil électrique de forte puissance présente les caractéristiques décrites ci-dessus.

En particulier, cet appareil électrique de forte puissance, d'une part, est un moteur ou un générateur et, d'autre part, présente une puissance qui est supérieure à 2 Mégawatts, notamment supérieure à 100 Mégawatts, voire supérieure à 1000 Mégawatts.

Dans cet appareil de forte puissance et tel que mentionné ci-dessus, ledit au moins un deuxième élément métallique 3 (plaque métallique magnétique) contient au moins un acier doux (plus particulièrement est constitué par au moins un tel acier doux), plus particulièrement à grains non orientés (notamment de nuance M230 à M1300, de préférence de nuance M250, M400 ou M600) et/ou au moins un acier inoxydable (notamment de nuance 304L, 316L).

De manière alternative ou (et de préférence additionnelle), ledit au moins un deuxième élément métallique 3 (plaque métallique magnétique) présente une épaisseur comprise entre 0,3mm et 2mm, de préférence entre 0,4mm et 1,5mm, notamment de l'ordre de 0,5mm.

Dans cet appareil de forte puissance et tel que mentionné ci-dessus, ledit au moins un premier élément métallique 2 (espaceur) contient au moins un métal (plus particulièrement est constitué par au moins un tel métal) qui présente une perméabilité magnétique inférieure à 1,2, de préférence inférieure à 1,1.

De manière alternative ou (et de préférence) additionnelle, ledit au moins un premier élément métallique 2 (espaceur) contient (plus particulièrement est constitué par) au moins un acier, plus particulièrement un acier doux et/ou un acier inoxydable, notamment un acier inoxydable austénitique (notamment de nuances 302HQ, 304L, 316L).

## Revendications

1. Procédé de fabrication d'un appareil électrique de forte puissance, qui est refroidi par circulation d'air, et qui comporte, d'une part, une pluralité de plaques métalliques magnétiques parallèles empilées et, d'autre part, une pluralité d'espaceurs métalliques, qui sont interposés entre deux plaques métalliques magnétiques adjacentes parmi la pluralité de plaques métalliques magnétiques, et qui sont soudés sur au moins l'une des deux plaques métalliques magnétiques adjacentes parmi la pluralité de plaques métalliques magnétiques,
- ce procédé de fabrication comporte un procédé de soudage d'au moins un premier élément métallique (2) qui est constitué par au moins un espaceur métallique parmi la pluralité d'espaceurs métalliques sur un deuxième élément métallique (3) qui est constitué par une plaque métallique magnétique parmi la pluralité de plaques métalliques magnétiques ;
- **caractérisé par le fait que** le procédé de soudage comporte :
- une étape d'appui qui consiste à exercer une pression sur ledit au moins un premier élément métallique (2) et en direction du deuxième élément métallique (3), ceci en sorte que ledit au moins un premier élément métallique (2) prenne appui contre le deuxième élément métallique (3) et ;
- une étape de soudage qui consiste à souder au laser ledit au moins un premier élément métallique (2) sur le deuxième élément métallique (3), ceci alors que ledit au moins un premier élément métallique (2) est maintenu en appui contre le deuxième élément métallique (3).

2. Procédé de fabrication d'un appareil électrique de forte puissance selon la revendication 1, **caractérisé par le fait que** le deuxième élément métallique (3) présente, d'une part, une face postérieure (30) destinée à venir reposer sur un support, d'autre part, une face antérieure (31), qui est opposée à la face postérieure (30), qui est orientée en direction dudit au moins un premier élément métallique (2), et contre laquelle ledit au moins un premier élément métallique (2) prend appui tandis que le procédé de soudage comporte, préalablement à l'étape de soudage, une étape de positionnement au cours de laquelle au moins un moyen de soudage laser (5 ; 5') est positionné du côté de la face antérieure (31) du deuxième élément métallique (3), l'étape de soudage étant alors effectuée, d'une part, du côté de la face antérieure (31) du deuxième élément métallique (3) et, d'autre part, avec une puissance ajustée en sorte de réaliser une zone fusionnée, qui est localisée du côté de la face antérieure (31) du deuxième élément métallique (3), et dont l'épaisseur est inférieure à l'épaisseur du deuxième élément métallique (3).

3. Procédé de fabrication d'un appareil électrique de forte puissance selon l'une quelconque des revendications précédentes, **caractérisé par le fait que** ledit au moins un premier élément métallique (2) présente, d'une part, une face d'appui (21) qui est configurée pour prendre appui contre le deuxième élément métallique (3), d'autre part, une première face latérale (20) qui s'étend à partir de la face d'appui (21), d'autre part encore, une deuxième face latérale (20') qui s'étend à partir de la face d'appui (21) tandis que l'étape de soudage consiste à souder, sur le deuxième élément métallique (3), au moins la première face latérale (20) dudit au moins un premier élément métallique (2) et/ou au moins la deuxième face latérale (20') dudit au moins un premier élément métallique (2), voire encore la face d'appui (21).

4. Procédé de fabrication d'un appareil électrique de forte puissance selon la revendication 3, **caractérisé par le fait que**, d'une part, la première face latérale (20) et la deuxième face latérale (20') dudit au moins un élément métallique (2) sont symétriques par rapport à un plan médian selon lequel ledit au moins un premier élément métallique (2) s'étend et, d'autre part, l'étape de soudage consiste à souder la première face latérale (20) et la deuxième face latérale (20') dudit au moins un élément métallique (2) sur le deuxième élément métallique (3), ceci de manière symétrique ou de manière décalée par rapport audit plan médian.

5. Procédé de fabrication d'un appareil électrique de forte puissance selon l'une quelconque des revendications 3 ou 4, **caractérisé par le fait que** l'étape de soudage consiste à souder, sur le deuxième élément métallique (3), au moins la première face latérale (20) et au moins la deuxième face latérale (20') dudit au moins un premier élément métallique (2), ceci de manière simultanée ou de manière alternative.

6. Procédé de fabrication d'un appareil électrique de forte puissance selon l'une quelconque des revendications précédentes, **caractérisé par le fait que**, préalablement à l'étape d'appui et à l'étape de soudage, le procédé de fabrication comporte une étape de dépose qui consiste à déposer le deuxième élément métallique (3) sur un support qui est au moins en partie constitué par un matériau qui incorpore du cuivre et/ou qui présente une conductivité thermique supérieure à 300 W.m⁻¹.K⁻¹ à 20°C.

7. Procédé de fabrication d'un appareil électrique de forte puissance selon l'une quelconque des revendications précédentes, **caractérisé par le fait que**, au moins pendant l'étape de soudage, on assure un refroidissement d'au moins un dispositif de soudage (1) qui est configuré pour mettre en œuvre l'étape de soudage.

8. Procédé de fabrication d'un appareil électrique de forte puissance selon l'une quelconque des revendications précédentes, **caractérisé par le fait que** l'étape de soudage, qui consiste à souder au laser, est mise en œuvre par au moins une torche de soudure laser, plus particulièrement par deux torches de soudure laser.

9. Procédé de fabrication d'un appareil électrique de forte puissance selon l'une quelconque des revendications précédentes, **caractérisé par le fait que** l'appareil électrique de forte puissance, d'une part, est un moteur ou un générateur et, d'autre part, présente une puissance qui est supérieure à 2 Mégawatts.

10. Procédé de fabrication d'un appareil électrique de forte puissance selon l'une quelconque des revendications précédentes, **caractérisé par le fait que** ledit au moins un deuxième élément métallique (3) contient au moins un acier doux, plus particulièrement à grains non orientés et/ou au moins un acier inoxydable.

11. Procédé de fabrication d'un appareil électrique de forte puissance selon l'une quelconque des revendications précédentes, **caractérisé par le fait que** ledit au moins un deuxième élément métallique (3) présente une épaisseur comprise entre 0,3mm et 2mm, de préférence entre 0,4mm et 1,5mm.

12. Procédé de fabrication d'un appareil électrique de forte puissance selon l'une quelconque des revendications précédentes, **caractérisé par le fait que** ledit au moins un premier élément métallique (2) contient au moins un métal qui présente une perméabilité magnétique inférieure à 1,2, de préférence inférieure à 1,1.

13. Procédé de fabrication d'un appareil électrique de forte puissance selon l'une quelconque des revendications précédentes, **caractérisé par le fait que** ledit au moins un premier élément métallique (2) contient au moins un acier, plus particulièrement un acier doux et/ou un acier inoxydable, notamment un acier inoxydable austénitique.

14. Appareil électrique de forte puissance, qui est refroidi par circulation d'air, et qui comporte, d'une part, une pluralité de plaques métalliques magnétiques parallèles empilées et, d'autre part, une pluralité d'espaceurs métalliques, qui sont interposés entre deux plaques métalliques magnétiques adjacentes parmi la pluralité de plaques métalliques magnétiques, et qui sont soudés sur au moins l'une des deux plaques métalliques magnétiques adjacentes parmi la pluralité de plaques métalliques magnétiques,
- **caractérisé par le fait qu'**il comporte :
- d'une part, au moins un premier élément métallique (2), qui est constitué par au moins un espaceur métallique parmi la pluralité d'espaceurs métalliques, et qui présente une face d'appui (21), une première face latérale (20) qui s'étend à partir de la face d'appui (21), et une deuxième face latérale (20') qui s'étend à partir de la face d'appui (21) ;
- d'autre part, un deuxième élément métallique (3), qui est constitué par une plaque métallique magnétique parmi la pluralité de plaques métalliques magnétiques, et contre lequel la face d'appui (21) dudit au moins un premier élément métallique (2) prend appui ;
- d'autre part encore, au moins une soudure (S ; S') qui soude, d'une part, le deuxième élément métallique (3) et, d'autre part, au moins la première face latérale (20) dudit au moins un premier élément métallique (2) et/ou au moins la deuxième face latérale (20') dudit au moins un premier élément métallique (2).

15. Appareil électrique de forte puissance selon la revendication 14, **caractérisé par le fait que** le deuxième élément métallique (3) présente, d'une part, une face postérieure (30), d'autre part, une face antérieure (31), qui est opposée à la face postérieure (30), qui est orientée en direction dudit au moins un premier élément métallique (2), et contre laquelle ledit au moins un premier élément métallique (2) prend appui tandis que ladite au moins une soudure (S ; S') est constituée par une zone fusionnée, qui est localisée du côté de la face antérieure (31) du deuxième élément métallique (3), et dont l'épaisseur est inférieure à l'épaisseur du deuxième élément métallique (3).

16. Appareil électrique de forte puissance selon l'une quelconque des revendications 14 ou 15, **caractérisé par le fait que**, d'une part, la première face latérale (20) et la deuxième face latérale (20') dudit au moins un premier élément métallique (2) sont symétriques par rapport à un plan médian selon lequel ledit au moins un premier élément métallique (2) s'étend, d'autre part, il comporte au moins une première soudure (S) qui soude la première face latérale (20) dudit au moins un premier élément métallique (2) sur le deuxième élément métallique (3) ainsi qu'une deuxième soudure (S') qui soude la deuxième face latérale (20') dudit au moins un premier élément métallique (2) sur le deuxième élément métallique (3) et, d'autre part encore, la première soudure (S) et la deuxième soudure (S') sont symétriques ou décalées par rapport audit plan médian.
